# EUROPEAN PATENT SPECIFICATION

(11) **EP 3 434 822 B1**
(45) Date of publication and mention of the grant of the patent: **05.01.2022**
(21) Application number: 17182862.7
(22) Date of filing: 24.07.2017
(51) Int. Cl.: D06F 34/10, D06F 37/30, D06F 25/00, D06F 37/04, D06F 58/08, D06F 58/36, D06F 103/04, D06F 103/24, D06F 103/46, D06F 105/46, D06F 105/48

(54) **GARMENT WASHING AND/OR DRYING MACHINE**
WASCH- UND/ODER TROCKNUNGSMASCHINE FÜR BEKLEIDUNG
MACHINE À LAVER ET/OU SÉCHER LE LINGE

(43) Date of publication of application: 30.01.2019
(73) Proprietor: Vestel Elektronik Sanayi ve Ticaret A.S., 45030 Manisa (TR)
(72) Inventor: ULUAG, Onur, 45030 Manisa (TR); KABASAKAL, Kivanç, 45030 Manisa (TR)
(74) Representative: Flint, Adam

(56) References cited:
- WO-A1-2004/059066
- CN-A- 105 986 413
- JP-A- 2005 177 332
- US-A- 1 722 984
- US-A1- 2005 132 760

## Description

### Technical Field

The present invention relates to a washing and/or drying machine.

### Background

Washing machines are used for washing garments such as clothes. Drying machines are used for drying wet garments. Combined washer/dryer machines may also be provided. Typically a user can select a suitable washing and/or drying cycle via an interface on a front face of the machine. A user places garments to be washed or dried in to a drum of the machine. The drum is caused to rotate during a washing or drying cycle.

CN105986413A discloses a washing machine comprising an electric device. The electric device comprises a power supply unit, power modulator, a stator unit and a rotor unit. The rotor unit is made of magnetic material. The power modulator supplies power to the internal winding of the stator unit so that a magnetic field acts on the magnetic rotor unit such that driving/braking of the rotor unit is achieved.

WO2004/059066A1 describes a washer/dryer having a tub in which a drum moves. A stator is placed on the tub and a rotor is placed on the drum. When mains voltage is applied, the stator forms a magnetic field and moves the rotor.

JP2005177332A describes a washing machine comprising a cylindrical rotary tub having a rotor comprising permanent magnets fixed to the outer surface of the tub.

### Summary

According to a first aspect of the present invention as defined by claim there is provided a garment washing and/or drying machine comprising: a main body portion; a drum located within the main body portion, the drum comprising an open end for receiving garments placed in the drum and a closed end for containing the garments within the drum, the closed end being opposite the open end and the drum comprising a side portion connecting the open end to the closed end, the drum configured for rotation about a rotational axis of the drum; the drum comprising at least one magnet located on the side portion of the drum, for magnetic interaction with a corresponding at least one electromagnet in the main body portion of the washing machine; and a controller for controlling electrical current supplied to the at least one electromagnet so as to control a magnetic field to which the at least one magnet on the drum is subjected, enabling the controller to control movement of the drum; wherein the at least one magnet located on the side portion of the drum comprises a plurality of permanent magnets, and wherein each of the plurality of magnets extends longitudinally along the side portion of the drum, between the closed end and the open end.

According to an example, the controlling movement of the drum comprises controlling rotational movement of the drum about its rotational axis.

According to an example, the controlling movement of the drum comprises controlling translational movement of the drum along its rotational axis.

According to an example, the machine comprises a frame within the main body portion.

According to an example, the machine comprises a stator assembly attached to the frame, the at least one electromagnet comprised in the stator assembly.

According to an example, the stator assembly is arranged to substantially surround the drum, the stator assembly comprising a generally circular inner periphery to complement a cylindrical shape of the drum.

According to an example, the at least one electromagnet is comprised on the frame.

According to an example, the machine comprises a position sensor for sensing a position of the drum in the machine.

According to an example, the position sensor comprises a magnetic field sensor, a determined magnetic field strength being indicative of the position.

According to an example, the magnetic field sensor comprises the at least one electromagnet and/or the at least one magnet located on the drum.

According to an example, the controller is configured to use position information received from the position sensor so as to control the movement of the drum.

According to an example, the at least one electromagnet comprises a plurality of windings operable in a 3-phase configuration.

According to an example, the machine comprises a bearing assembly for supporting a shaft of the drum, the bearing assembly comprising one or more of: a rotational bearing; a thrust bearing.

### Brief Description of the Drawings

To assist understanding of the present invention and to show how embodiments may be put into effect, reference is made by way of example to the accompanying drawings in which:
Figure 1 shows schematically a washing machine according to an example;
Figure 2 shows schematically a prior art drum-drive assembly;
Figure 3 shows schematically another prior art drum-drive assembly;
Figure 4 schematically shows a drum-drive assembly for a washing and/or drying machine according to an example;
Figure 5 schematically shows a drum of a washing and/or drying machine according to an example, in use.

### Detailed Description

The present invention has applicability to garment washing machines, garment drying machines, or combined washing/drying machines. In the foregoing description the term "washing machine" or simply "machine" may be used, however it will be understood that any such reference is also applicable to a drying machine (e.g tumble dryer) or a combined washer/dryer, unless specifically stated otherwise. The terms "garments" and "clothes" may also be used interchangeably.

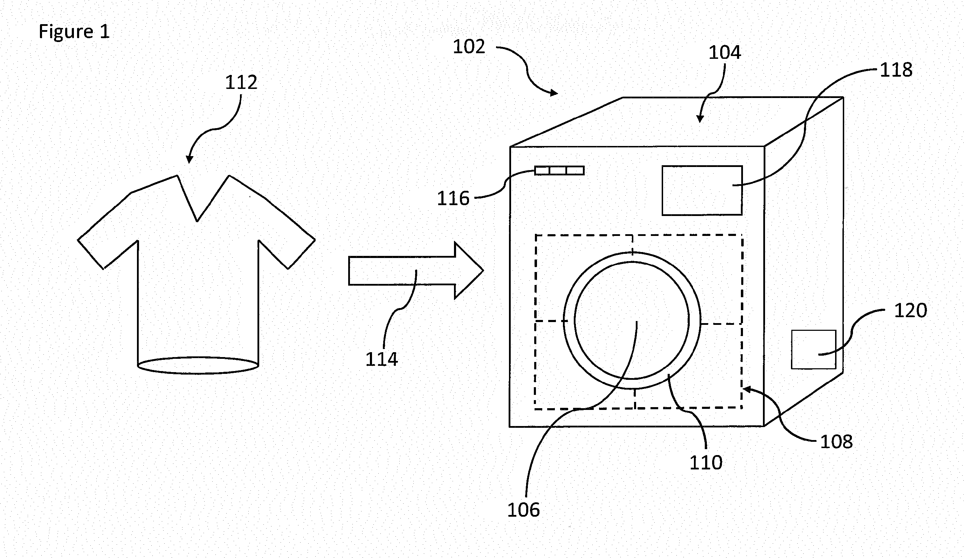

Figure 1 shows an example washing and/or drying machine 102. The machine 102 comprises a main body portion 104. Within the main body portion 104 there is located a drum 106. Typically the drum is cylindrical and is controlled to rotate during a washing and/or drying cycle. To this end a motor (not shown) is provided to provide the motive force to rotate the drum. The drum 106 is supported by a frame within the main body portion 104. The frame is schematically shown with the dashed lines 108. A window or door 110 is also provided to close off the drum during use of the machine 102.

A power connector is shown at 120. The power connector 120 enables the machine 102 to be connected to mains power for electrically powering the machine 102.

A user can place a garment to be washed or dried 112 in to the drum 106 prior to a washing or drying cycle. This is schematically represented by arrow 114. Although in Figure 1 the garment is shown as a T-shirt it will of course be understood that the garment may be any type of garment such as a shirt, jumper, trousers, underwear, skirt, shoes etc. The term garment may also include any other type of washable object such as sheets, pillowcases etc. That is the term "garment" may be interchangeable with the term "item" or "object".

The user can control functions of the washing machine via user interface 116, such as selecting a desired cycle. The user interface may comprise one or more buttons. A display 118 may also be provided. The display 126 may provide information to a user such as available cycles, time remaining of a cycle etc.

As discussed above, in use the drum of the washing machine is controlled to rotate. The speed of rotation may also be controlled. A motor is provided to provide the rotational force to the drum.

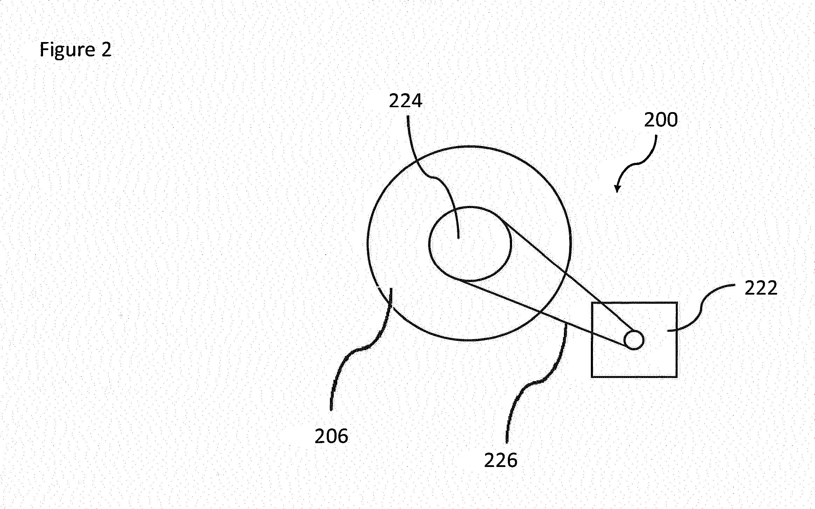

Figure 2 shows a prior art example of a motor assembly for rotating a drum 206 of a washing/drying machine. The motor assembly is shown generally at 200. The motor assembly comprises a motor 222 connected to a pulley wheel 224 via a belt 226. The pulley wheel 224 is fixed to drum 206, such that rotation of pulley wheel 224 causes a corresponding rotation of drum 206. The present inventors have realised that such an arrangement can cause undesirable vibrations of the drum 206, in use, due to the unevenly distributed mass of the drum (for example due to the additional weight of the pulley wheel 224 at one end thereof). This uneven weight distribution may also cause translational movement of the drum along the axis of rotation of the drum, which may again lead to undesirable vibrations. The "pulling" effect of the belt may also cause vibrations of the drum.

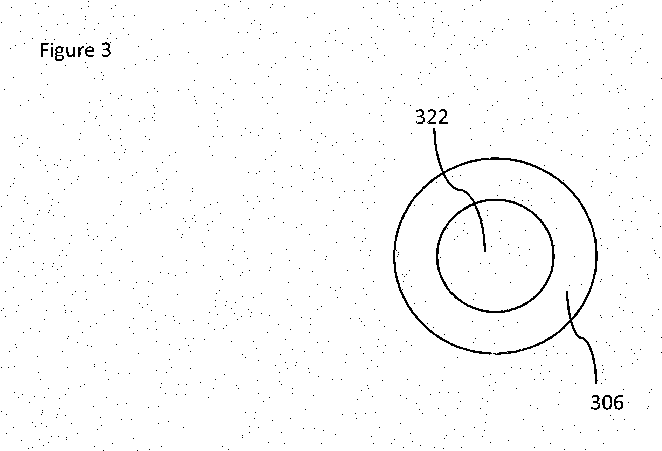

Figure 3 shows a further prior art example of a "direct-drive" washing machine drum 306. In this example a motor 322 is connected directly to the back of the drum 306, to cause rotation thereof in use. This system eliminates vibrations caused by the belt in the motor assembly of Figure 2, but as realized by the present inventors reduces the available depth of the drum 306 due to the space required to accommodate the motor 322 at the back of the drum. This has an effect of reducing the available capacity of the drum 306. Furthermore, undesirable vibrations are still a problem in the system of Figure 3, and further suspension components such as dampers may be required in order to damp those vibrations.

In an example embodiment a washing and/or drying machine is provided in which a motor assembly is provided in which the motor is located outside of the drum, such that at least a portion of the drum is enclosed by the motor. By way of explanation the overall assembly may be considered to comprise a rotor and stator assembly, in which the drum itself comprises the rotor.

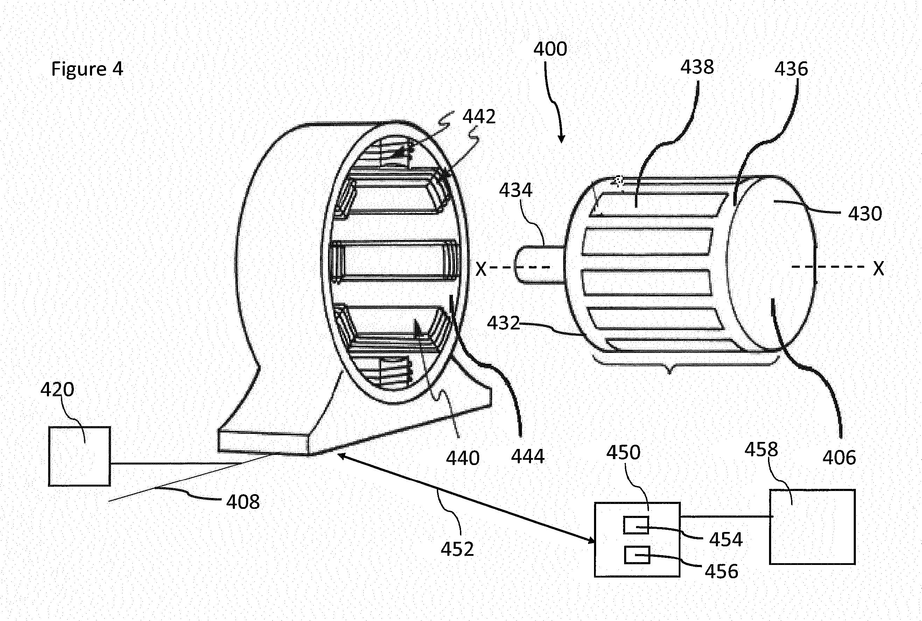

This will be explained in more detail with respect to Figure 4 which shows an example drum drive-assembly 400. A drum 406 comprises an open end 430 and a closed end 432. The closed end 432 is opposite the open end 430. The open end 430 is arranged so as to be positioned proximate to a door of a washing machine when located therein. The open end 430 enables clothes or other garments to be placed in to an interior of the drum 406. The closed end is "closed" in as much as it prevents garments from passing through or falling out of the closed end 432. However it will be understood that in some embodiments the closed end may include, for example, one or more perforations or holes or the like to enable water or air to pass through closed end 432. A shaft 434 is provided which projects from closed end 432. When located in a suitable washing machine the shaft 434 is located in a suitable bearing assembly of the washing machine, to support rotation and/or translational movement of the drum about and/or along its rotational axis X-X. The bearing assembly may comprise a roller bearing for enabling and supporting the rotation of the shaft 434, and/or a thrust bearing for enabling and supporting the translational movement of the shaft 434.

A side 436 of the drum 406 connects and extends between the closed end 432 and the open end 430. An outer surface of the side 436 is parallel or substantially parallel to the axis of rotation X-X. The side 436 comprises at least one magnet 438. According to the invention, the at least one magnet 438 comprises a plurality of magnets. Each magnet extends along the side 436 in a direction parallel to rotational axis X-X. According to the invention, each magnet comprises a permanent magnet. In this example the magnets 438 are located on an outer surface of the side 436 However, in other examples the magnets 438 may be positioned on an inside surface of side 436 or embedded within side 436.

A stator assembly is schematically shown at 440. In this example the stator 440 is attached to a frame 408 of the washing machine. The stator comprises at least one electromagnet 442. In this example the at least one electromagnet 442 comprises a plurality of electromagnets. The at least one electromagnet 442 may be a coil. The at least one electromagnet may comprise a plurality of windings operable in a 3-phase configuration. In this example the stator 440 comprises a circular inner periphery 444 to complement the cylindrical shape of the drum 406. Although Figure 4 shows the drum (or rotor) 406 and stator 440 in a separate and exploded fashion for ease of understanding, it will be understood that in use the drum 406 is positioned within, or at least partially within, an interior of the stator 440. That is it may be considered that the drum 406 is encircled or surrounded by the motor or stator 440. The drum drive assembly is also operably connected to a suitable power source shown schematically at 420. The power source 420 is operable to supply electrical current to the at least one electromagnet 442.

It will be understood that the construction of the stator shown in Figure 4 is by way of example only and that in other embodiments different constructions or arrangements may be used. For example, in one example, the stator may consist of one or more electromagnets positioned on the frame 408 of the washing machine.

A controller, shown schematically at 450, is in communication with (as represented by arrow 452), and operable to control drum-drive assembly 400. The controller comprises memory 454 and a processor 456. The controller 450 can control the current supplied to the at least one electromagnet 442. Supplying current to the electromagnet 442 creates a magnetic field in the vicinity of the stator 442. The magnets 438 on the drum 406 are subject to this magnetic field, which accordingly causes movement of the drum 406 due to magnetic interaction between magnets 438 and the magnetic field. Accordingly the controller 450 can control movement of the drum 406. The movement of the drum can be rotational i.e. about axis X-X, in a clockwise or anticlockwise direction. Translational movement of the drum 406 (i.e. in a direction parallel to axis X-X) may also be controlled by the controller 450. The translational movement may be inward movement i.e. movement of the drum 406 towards the stator 440 when viewing Figure 4; or outward movement i.e. movement of the drum 406 away from the stator 440 when viewing Figure 4. For controlling translational movement of the drum 406, the two-dimensional position may be controlled relative to a reference point (0,0), which in one example is the axis X-X. The controller 450 can selectively control the direction of rotation (e.g. clockwise/ anticlockwise) and/or direction of translation (e.g. inward or outward). The controller may achieve this, for example, by selectively powering of the electromagnets 442 (where there is a plurality of electromagnets) and/or by selective powering of one or more regions of the one or more electromagnets 442, and/or by adjusting the magnitude of supplied current to the electromagnets.

The controller is also in communication with a position sensor shown schematically at 458. Using the position sensor the controller 458 can determine a position of the drum 406. The positional information may pertain to a rotational and/or translational position of the drum 406. In some embodiments the position sensor 458 comprises the at least one electromagnet 442 and/or magnets 438 on the drum 406, or the position sensor 458 comprises a magnetic field sensor proximate to the at least one electromagnet 442 and/or magnets 438 on the drum 406. Positional information of the drum 406 can be determined based on a determined strength or magnitude of the magnetic field. Of course, in other examples different types of position sensors may be used in order to obtain the positional information of the drum 406. One or more optical sensors may be used in this respect, for example.

There is therefore provided a feedback loop, enabling the controller 450 to ascertain position information of the drum 406 and to control movement of the drum 406 accordingly. The movement of the drum 406 can therefore be controlled in order to control or reduce vibration of the drum 406 in the washing machine.

In some examples the stator 440 is unitary, and can be installed in the washing machine in one piece. Alternatively the stator 440 may comprise separate components which can be installed separately in the washing machine. For example the stator may comprise separate electromagnetic coils attached to the frame 408 in the washing machine. In such an implementation the frame may be considered to comprise the stator.

Together, the drum (or rotor) 406 and stator 440 may be considered to form a brushless direct current (BLDC) motor arrangement. In one example the drum 406 is connected to the stator 440 via a revolute joint, the stator 440 surrounding the drum 406.

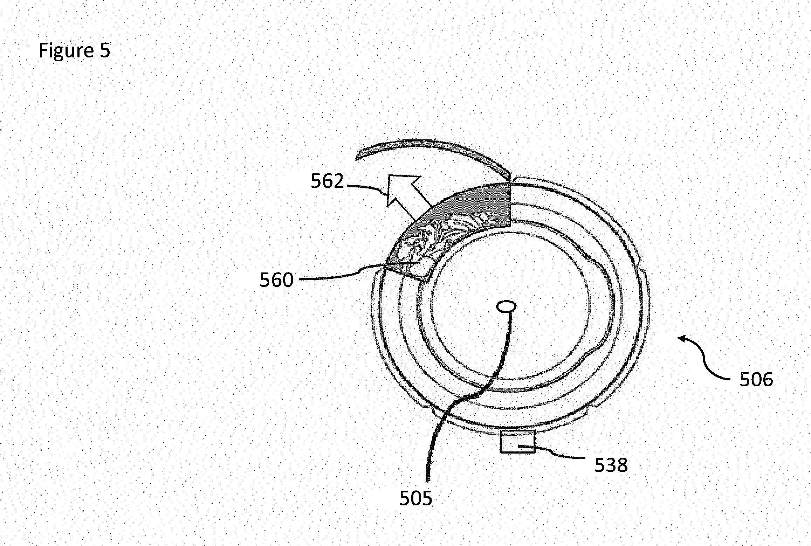

Figure 5 schematically shows a drum 506 of a washing and/or drying machine. The drum 506 is in use and rotating about a central axis 505. Garments 560 and water are pushed to the outer edge of the drum by virtue of centrifugal force which is schematically shown by arrow 562.

The centrifugal force generated is affected by the centre-of-gravity (or inertia axis) of the drum 506. Magnets 538 are provided on the side of the drum 506 in a manner as explained with respect to Figure 4. Due to a relatively increased mass of the drum 506, caused by the magnets 538, the effect of weight of laundry (e.g. garments) and water to centre of gravity is reduced, meaning that the inertia axis becomes more centralized in the drum, which causes the centrifugal force 562 to be relatively reduced.

It will be understood that the examples described do not require a belt-drive assembly as shown in the prior art example of Figure 2. Accordingly the examples described do not suffer from the vibrational issues associated with such belt-drive assemblies. Furthermore, and in comparison with the prior art example of Figure 3, the embodiments described herein do not require a motor assembly to be provided behind the drum. Accordingly more space is available enabling a relatively deeper drum to be used which can increase washing and/or drying capacity.

By placing the magnets on the outside of the drum, as shown for example in Figure 4, relatively more torque can be applied since it is applied to the drum radius. This may enable faster spin speeds of the drum, and /or faster acceleration and /or deceleration of the drum. This arrangement may also provide smoother power transmission to the drum, in use.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A garment washing and/or drying machine (102) comprising:
a main body portion (104);
a drum (106, 406) located within the main body portion (104), the drum (106, 406) comprising an open end (430) for receiving garments placed in the drum and a closed end (432) for containing the garments within the drum, the closed end (432) being opposite the open end (430) and the drum (106, 406) comprising a side portion (436) connecting the open end (430) to the closed end (432), the drum (106, 406) configured for rotation about a rotational axis of the drum;
the drum (106, 406) comprising at least one magnet (438) located on the side portion (436) of the drum, for magnetic interaction with a corresponding at least one electromagnet (442) in the main body portion (104) of the washing and/or drying machine (102); and
a controller (450) for controlling electrical current supplied to the at least one electromagnet (442) so as to control a magnetic field to which the at least one magnet (438) on the drum is subjected, enabling the controller (450) to control movement of the drum (106, 406); **wherein** the at least one magnet (438) located on the side portion (436) of the drum (106, 406) comprises a plurality of permanent magnets;
**characterized in that** each of the plurality of magnets extends longitudinally along the side portion (436) of the drum, between the closed end (432) and the open end (430).

2. A garment washing and/or drying machine (102) according to claim 1, the controlling movement of the drum (106, 406) comprising controlling rotational movement of the drum about its rotational axis.

3. A garment washing and/or drying machine (102) according to claim 1 or claim 2, the controlling movement of the drum (106, 406) comprising controlling translational movement of the drum (106, 406) along its rotational axis.

4. A garment washing and/or drying machine (102) according to any of claims 1 to 3, comprising a frame (108) within the main body portion.

5. A garment washing and/or drying machine (102) according to claim 4, the machine comprising a stator assembly (440) attached to the frame (108), the at least one electromagnet (442) comprised in the stator assembly (440).

6. A garment washing and/or drying machine (102) according to claim 5, the stator assembly (440) arranged to substantially surround the drum (106, 406), the stator assembly (440) comprising a generally circular inner periphery (444) to complement a cylindrical shape of the drum (106, 406).

7. A garment washing and/or drying machine (102) according to claim 4, the at least one electromagnet (442) comprised on the frame (108).

8. A garment washing and/or drying machine (102) according to any of claims 1 to 7, comprising a position sensor (458) for sensing a position of the drum (106, 406) in the machine.

9. A garment washing and/or drying machine (102) according to claim 8, the position sensor (458) comprising a magnetic field sensor, a determined magnetic field strength being indicative of the position.

10. A garment washing and/or drying machine (102) according to claim 9, the magnetic field sensor comprising the at least one electromagnet (442) and/or the at least one magnet (438) located on the drum.

11. A garment washing and/or drying machine (102) according to any of claims 8 to 10, the controller (450) configured to use position information received from the position sensor (458) so as to control the movement of the drum (106, 406).

12. A garment washing and/or drying machine (102) according to any of claims 1 to 11, wherein the at least one electromagnet (442) comprises a plurality of windings operable in a 3-phase configuration.

13. A garment washing and/or drying machine (102) according to any of claims 1 to 12, the machine comprising a bearing assembly for supporting a shaft (434) of the drum (106, 406), the bearing assembly comprising one or more of: a rotational bearing; a thrust bearing.

## Patentansprüche

1. Wasch- und/oder Trockenmaschine für Kleidungsstücke (102), aufweisend:
ein Hauptkörperstück (104);
eine im Hauptkörperstück (104) gelegene Trommel (106, 406), wobei die Trommel (106, 406) ein offenes Ende (430) zum Aufnehmen von in die Trommel gelegten Kleidungsstücken und ein geschlossenes Ende (432) zum Halten der Kleidungsstücke in der Trommel aufweist, wobei das geschlossene Ende (432) dem offenen Ende (430) gegenüberliegt und die Trommel (106, 406) einen das offene Ende (430) mit dem geschlossenen Ende (432) verbindenden Seitenabschnitt (436) aufweist, wobei die Trommel (106, 406) zur Drehung um eine Drehachse der Trommel ausgestaltet ist;
wobei die Trommel (106, 406) wenigstens einen am Seitenabschnitt (436) der Trommel angeordneten Magneten (438) zur magnetischen Wechselwirkung mit entsprechend wenigstens einem Elektromagneten (442) im Hauptkörperstück (104) der Wasch- und/oder Trockenmaschine (102) aufweist; und
eine Steuerung (450) zum Steuern des dem wenigstens einen Elektromagneten (442) zugeführten elektrischen Stroms, um ein Magnetfeld zu steuern, dem der wenigstens eine Magnet (438) an der Trommel ausgesetzt ist, was die Steuerung (450) ermöglicht, die Bewegung der Trommel (106, 406) zu steuern,
wobei der wenigstens eine am Seitenabschnitt (436) der Trommel (106, 406) angeordnete Magnet (438) mehrere Permanentmagnete aufweist;
**dadurch gekennzeichnet, dass** jeder der mehreren Magnete in Längsrichtung entlang des Seitenabschnitts (436) der Trommel zwischen dem geschlossenen Ende (432) und dem offenen Ende (430) verläuft.

2. Wasch- und/oder Trockenmaschine für Kleidungsstücke (102) nach Anspruch 1, wobei das Steuern der Bewegung der Trommel (106, 406) ein Steuern der Drehbewegung der Trommel um ihre Drehachse aufweist.

3. Wasch- und/oder Trockenmaschine für Kleidungsstücke (102) nach Anspruch 1 oder Anspruch 2, wobei das Steuern der Bewegung der Trommel (106, 406) ein Steuern der Translation der Trommel (106, 406) entlang ihrer Drehachse aufweist.

4. Wasch- und/oder Trockenmaschine für Kleidungsstücke (102) nach einem der Ansprüche 1 bis 3, aufweisend einen Rahmen (108) im Hauptkörperstück.

5. Wasch- und/oder Trockenmaschine für Kleidungsstücke (102) nach Anspruch 4, wobei die Maschine eine am Rahmen (108) angebrachte Statoranordnung (440) aufweist, wobei der wenigstens eine Elektromagnet (442) in der Statoranordnung (440) beinhaltet ist.

6. Wasch- und/oder Trockenmaschine für Kleidungsstücke (102) nach Anspruch 5, wobei die Statoranordnung (440) gestaltet ist, um die Trommel (106, 406) wesentlich zu umschließen, wobei die Statoranordnung (440) einen grundsätzlich kreisförmigen Innenumfang (444) aufweist, um eine zylindrische Form der Trommel (106, 406) zu komplementieren.

7. Wasch- und/oder Trockenmaschine für Kleidungsstücke (102) nach Anspruch 4, wobei der wenigstens eine Elektromagnet (442) am Rahmen (108) beinhaltet ist.

8. Wasch- und/oder Trockenmaschine für Kleidungsstücke (102) nach einem der Ansprüche 1 bis 7, aufweisend einen Stellungssensor (458) zum Erfassen einer Stellung der Trommel (106, 406) in der Maschine.

9. Wasch- und/oder Trockenmaschine für Kleidungsstücke (102) nach Anspruch 8, wobei der Stellungssensor (458) einen Magnetfeldsensor aufweist, wobei eine bestimmte Magnetfeldstärke die Stellung anzeigt.

10. Wasch- und/oder Trockenmaschine für Kleidungsstücke (102) nach Anspruch 9, wobei der Magnetfeldsensor den wenigstens einen Elektromagneten (442) und / oder den wenigstens einen an der Trommel angeordneten Magneten (438) aufweist.

11. Wasch- und/oder Trockenmaschine für Kleidungsstücke (102) nach einem der Ansprüche 8 bis 10, wobei die Steuerung (450) konfiguriert ist, um vom Stellungssensor (458) empfangene Stellungsinformationen zu verwenden, um die Bewegung der Trommel (106, 406) zu steuern.

12. Wasch- und/oder Trockenmaschine für Kleidungsstücke (102) nach einem der Ansprüche 1 bis 11, wobei der wenigstens eine Elektromagnet (442) mehrere Wicklungen aufweist, die in einer 3-Phasen-Konfiguration betreibbar sind.

13. Wasch- und/oder Trockenmaschine für Kleidungsstücke (102) nach einem der Ansprüche 1 bis 12, wobei die Maschine eine Lageranordnung zum Stützen einer Welle (434) der Trommel (106, 406) aufweist, wobei die Lageranordnung ein oder mehr aufweist von: einem Drehlager; einem Drucklager.

## Revendications

1. Machine à laver et / ou à sécher le linge (102) comprenant :
une partie de corps principal (104) ;
un tambour (106, 406) qui est situé à l'intérieur de la partie de corps principal (104), le tambour (106, 406) comprenant une extrémité ouverte (430) servant à recevoir des vêtements placés dans le tambour et une extrémité fermée (432) servant à retenir les vêtements à l'intérieur du tambour, l'extrémité fermée (432) étant opposée à l'extrémité ouverte (430) et le tambour (106, 406) comprenant une partie latérale (436) reliant l'extrémité ouverte (430) à l'extrémité fermée (432), le tambour (106, 406) étant configuré pour tourner autour d'un axe de rotation du tambour, le tambour (106, 406) comprenant au moins un aimant (438) qui est situé sur la partie latérale (436) du tambour à des fins d'interaction magnétique avec au moins un électro-aimant correspondant (442) dans la partie de corps principal (104) de la machine à laver et / ou à sécher (102) ; et
un contrôleur (450) qui sert à contrôler le courant électrique fourni audit au moins un électro-aimant (442) de manière à contrôler un champ magnétique auquel ledit au moins un aimant (438) sur le tambour est soumis, ce qui permet au contrôleur (450) de contrôler le mouvement du tambour (106, 406),
dans laquelle ledit au moins un aimant (438) qui est situé sur la partie latérale (436) du tambour (106, 406) comprend une pluralité d'aimants permanents,
**caractérisée en ce que** chaque aimant de la pluralité d'aimants s'étend longitudinalement le long de la portion latérale (436) du tambour, entre l'extrémité fermée (432) et l'extrémité ouverte (430).

2. Machine à laver et / ou à sécher le linge (102) selon la revendication 1, dans laquelle le contrôle du mouvement du tambour (106, 406) consiste à contrôler le mouvement de rotation du tambour autour de son axe de rotation.

3. Machine à laver et / ou à sécher le linge (102) selon la revendication 1 ou 2, dans laquelle le contrôle du mouvement du tambour (106, 406) consiste à contrôler le mouvement de translation du tambour (106, 406) le long de son axe de rotation.

4. Machine à laver et / ou à sécher le linge (102) selon l'une quelconque des revendications 1 à 3, comprenant un châssis (108) à l'intérieur de la partie de corps principal.

5. Machine à laver et / ou à sécher le linge (102) selon la revendication 4, dans laquelle la machine comprend un ensemble stator (440) qui est fixé au châssis (108), ledit au moins un électro-aimant (442) étant compris dans l'ensemble stator (440).

6. Machine à laver et / ou à sécher le linge (102) selon la revendication 5, dans laquelle l'ensemble stator (440) est agencé pour entourer sensiblement le tambour (106, 406), l'ensemble stator (440) comprenant une périphérie intérieure généralement circulaire (444) pour compléter une forme cylindrique du tambour (106, 406).

7. Machine à laver et / ou à sécher le linge (102) selon la revendication 4, dans laquelle ledit au moins un électro-aimant (442) est compris sur le châssis (108).

8. Machine à laver et / ou à sécher le linge (102) selon l'une quelconque des revendications 1 à 7, comprenant un capteur de position (458) servant à détecter une position du tambour (106, 406) dans la machine.

9. Machine à laver et / ou à sécher le linge (102) selon la revendication 8, dans laquelle le capteur de position (458) comprend un capteur de champ magnétique, une intensité de champ magnétique déterminée étant indicative de la position.

10. Machine à laver et / ou à sécher le linge (102) selon la revendication 9, dans laquelle le capteur de champ magnétique comprend ledit au moins un électro-aimant (442) et / ou ledit au moins un aimant (458) qui est situé sur le tambour.

11. Machine à laver et / ou à sécher le linge (102) selon l'une quelconque des revendications 8 à 10, dans laquelle le contrôleur (450) est configuré pour utiliser des informations de position reçues du capteur de position (458) afin de contrôler le mouvement du tambour (106, 406).

12. Machine à laver et / ou à sécher le linge (102) selon l'une quelconque des revendications 1 à 11, dans laquelle ledit au moins un électro-aimant (442) comprend une pluralité d'enroulements pouvant fonctionner dans une configuration triphasée.

13. Machine à laver et / ou à sécher le linge (102) selon l'une quelconque des revendications 1 à 12, dans laquelle la machine comprend un ensemble palier servant à supporter un arbre (434) du tambour (106, 406), l'ensemble palier comprenant un ou plusieurs parmi : un palier rotatif ; un palier de butée.
